# FASCICULE DE BREVET EUROPEEN

(11) **EP 1 110 442 B1**
(45) Date de publication et mention de la délivrance du brevet: **11.04.2007**
(21) Numéro de dépôt: 00440316.8
(22) Date de dépôt: 05.12.2000
(51) Int. Cl.: A01D 34/73

(54) **Elément de coupe pour faucheuse**
Schneideelement für Mäher
Cutting element for mower

(30) Priorité: 23.12.1999 FR 9916870
(43) Date de publication de la demande: 27.06.2001
(73) Titulaire: KUHN S.A., 67706 Saverne Cedex (FR)
(72) Inventeur: Neuerburg, Horst, 67700 Saverne (FR)

(56) Documents cités:
- WO-A-98/20727
- AU-B- 418 830
- DE-A- 4 127 581
- FR-A- 2 774 853
- US-A- 3 755 999
- US-A- 4 765 127

## Description

La présente invention se rapporte à un élément de coupe pour une machine de coupe rotative comportant une pluralité d'organes de coupe adjacents dont chacun est destiné, durant la coupe, à tourner autour d'un axe respectif dirigé vers le haut, ledit élément de coupe comportant :
- une zone active destinée à couper des végétaux, et
- une zone de liaison destinée à lier ledit élément de coupe à un support de l'un respectif desdits organes de coupe de ladite machine.

Un tel élément de coupe est déjà connu de l'homme du métier. En effet, le document **WO 99/18769** décrit une faucheuse à disques équipée de couteaux comportant chacun :
- une première extrémité sensiblement plane munie d'un trou pour lier, de manière pivotante, ledit couteau à un axe aménagé à la périphérie du disque respectif de la faucheuse,
- une deuxième extrémité également sensiblement plane munie de deux arêtes de coupe, et
- une zone de connexion reliant la première extrémité et la seconde extrémité,
la première extrémité et la deuxième extrémité se situent dans des plans respectifs sensiblement parallèles et décalés l'un par rapport à l'autre.

Une des particularités de ce couteau connu réside dans le fait que la zone de connexion présente un profil sensiblement en forme de chevron dont le rôle est d'accroître la résistance à la flexion dudit couteau.

L'homme du métier sait, par expérience, que l'usure d'un élément de coupe lors du travail engendre un déplacement progressif de l'arête de coupe vers le plan vertical médian dudit élément de coupe. Sur ce couteau connu, ledit déplacement progressif se traduit par une remontée, le long de la pente du chevron, de la partie de l'arête de coupe située dans la zone de connexion. La partie de l'arête de coupe située à la deuxième extrémité reste, quant à elle, dans un plan sensiblement parallèle au sol. Par conséquent, dés le début de l'usure, la hauteur de coupe le long d'un même couteau ne reste pas uniforme, d'où une qualité de travail qui se dégrade très vite.

Le but de la présente invention consiste à remédier à ce problème tout en gardant une résistance à la flexion accrue de l'élément de coupe.

A cet effet, l'élément de coupe de la présente invention qui comporte :
- une première zone, appelée zone active, qui s'étend à une extrémité dudit élément de coupe, et qui est destinée à couper les végétaux, et
- une deuxième zone, appelée zone de liaison, qui s'étend à l'autre extrémité dudit élément de coupe, et qui est destinée à lier ledit élément de coupe au support de l'organe de coupe respectif,
est caractérisé en ce que la zone de liaison présente, en section transversale:
- une partie centrale relativement plane,
- un premier bord plié vers un côté d'un plan d'extension de ladite partie centrale, et
- un deuxième bord plié vers l'autre côté dudit plan d'extension.

Ce profil à bords pliés procure à l'élément de coupe une rigidité en flexion remarquable. La zone active qui est relativement plane, contient l'intégralité de l'arête (des arêtes) de coupe. Malgré la progression inévitable de l'usure, la hauteur de coupe reste sensiblement uniforme sur toute la longueur de l'élément de coupe.

D'autres caractéristiques de l'invention, à considérer séparément ou dans toutes leurs combinaisons possibles, apparaîtront dans les sous-revendications et dans la description suivante d'un exemple de réalisation non limitatif de l'invention représenté sur les dessins annexés sur lesquels :
- la **figure 1** représente, en vue du dessus avec des coupes partielles, une machine de coupe rotative, conforme à l'invention, en position de travail,
- la **figure 2** représente, en perspective, un exemple de réalisation d'un organe de coupe muni de deux éléments de coupe conformes à l'invention,
- la **figure 3** représente, en vue suivant la flèche III, l'organe de coupe de la figure 2, partiellement coupé,
- les **figures 4 à 7** représentent différentes vues d'un élément de coupe selon l'invention équipant l'organe de coupe des figures 2 et 3.

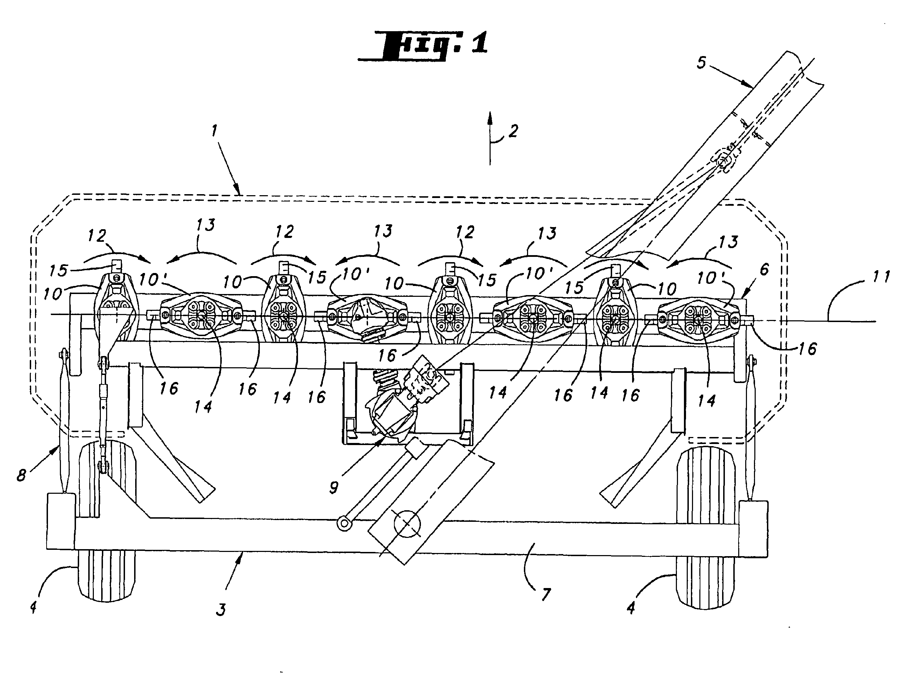

La figure 1 montre une machine de coupe rotative réalisée sous la forme d'une faucheuse à disques (1). Celle-ci est attelée à un véhicule tracteur non représenté qui, durant l'utilisation, la tire dans le sens et la direction d'avance (2).

Ladite faucheuse à disques (1) se compose d'un corps (3) roulant sur le sol au moyen de deux roues (4), et d'un timon (5) destiné à lier ledit corps (3) audit véhicule tracteur. Le corps (3) comporte, entre autres, un mécanisme de coupe (6) équipé ou non d'un mécanisme de traitement du produit coupé, et un châssis (7). Ledit châssis (7) assure, de manière connue, une liaison entre ledit timon (5) et le mécanisme de coupe (6). Ledit mécanisme de coupe (6) est lié audit châssis (7) au moyen d'un système de suspension (8) qui permet au mécanisme de coupe (6) de se déplacer principalement vers le haut, vers le bas et en roulis par rapport audit châssis (7) afin de suivre les irrégularités du sol indépendamment dudit châssis (7). Cette faucheuse à disques (1) comporte également des éléments de transmission (9) qui entraînent, de manière connue, le mécanisme de coupe (6) à partir d'une prise de force du véhicule tracteur. Pour de plus amples détails, l'homme du métier peut se référer au document **FR 2 759 531** où une telle faucheuse à disques (1) est parfaitement bien décrite.

Ledit mécanisme de coupe (6) qui repose, lors du travail, au moins partiellement sur le sol, comporte une pluralité d'organes de coupe (10, 10'). Dans l'exemple de la faucheuse à disques (1) de la figure 1, ledit mécanisme de coupe (6) comporte huit organes de coupe (10, 10') disposés à intervalle sensiblement régulier suivant une direction (11) sensiblement perpendiculaire, lors du travail, à la direction d'avance (2). Lesdits organes de coupe (10, 10') sont animés d'un mouvement de rotation (12, 13) autour d'un axe respectif (14) dirigé vers le haut. Sur cet exemple de faucheuse à disques (1), deux organes de coupe (10, 10') consécutifs ont des sens de rotation (12, 13) respectifs différents. En effet, en se référant à la figure 1, le premier organe de coupe (10) en partant de la gauche tourne dans le sens horaire (12) en vue de dessus, alors que l'organe de coupe (10') immédiatement voisin tourne dans le sens anti-horaire (13). On peut toutefois, dans le cadre de la présente invention, très bien imaginer des machines de coupe ayant d'autres répartitions du sens de rotation (12, 13) entre les différents organes de coupe (10, 10'). Chaque organe de coupe (10, 10') est muni d'au moins un élément de coupe (15, 16) dont le rôle principal est de sectionner des végétaux. Dans l'exemple de la figure 1, les organes de coupe (10, 10') sont équipés chacun de deux éléments de coupe (15, 16). Mais ce nombre n'est pas limitatif et il pourrait parfaitement être supérieur à deux.

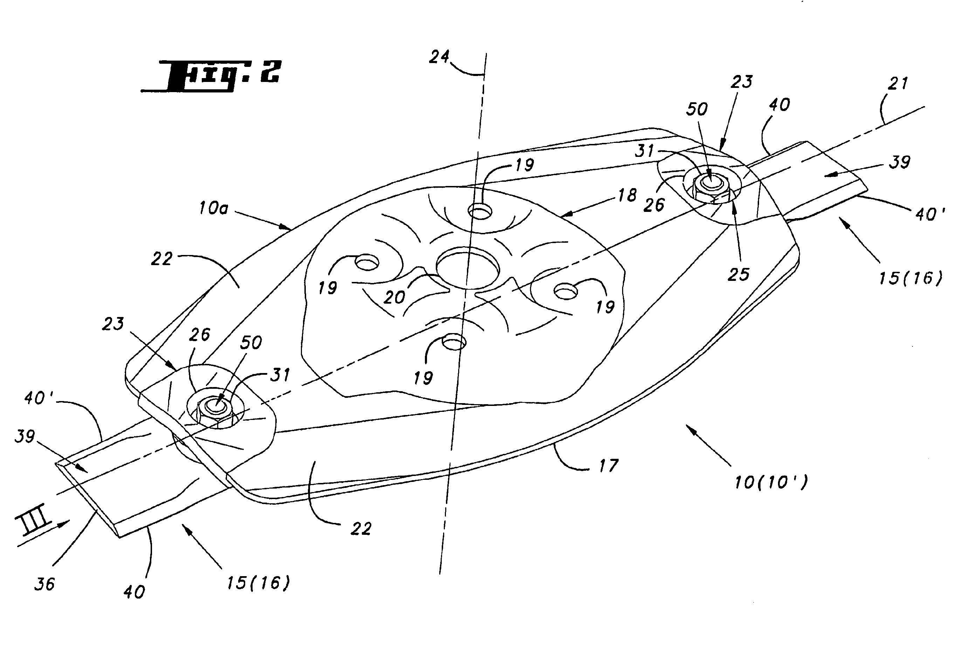

La figure 2 montre, en perspective et plus en détail, un exemple d'organe de coupe (10, 10') muni de deux éléments de coupe (15, 16).

L'organe de coupe (10, 10') de la figure 2 comporte, d'une manière connue, un support (10a) ayant une forme ovale (17) avec une partie centrale surélevée en forme de tronc de cône (18) dont la face supérieure comporte quatre trous de fixation (19) et un trou de centrage (20). La liaison d'un tel organe de coupe (10, 10') sur le mécanisme de coupe (6) d'une faucheuse à disques est parfaitement connue de l'homme du métier. Un élément de coupe (15, 16) respectif est lié près de chaque extrémité du grand diamètre (21) du support (10a) de forme ovale (17), lequel support (10a) comporte à cet effet une cuvette (23) respective. Ledit support (10a) est légèrement cambré de manière à présenter une pente (22) de part et d'autre de son grand diamètre (21). L'organe de coupe (10, 10') de la figure 2 respecte au moins sensiblement un axe de symétrie (24) qui est confondu, lors du travail, avec l'axe de rotation (14) dudit organe de coupe (10, 10') grâce au trou de centrage (20). La fréquence de rotation desdits organes de coupe (10, 10') étant grande sur ce type de machine de coupe, une telle précaution est nécessaire pour éviter des phénomènes de balourd trop importants qui seraient néfastes à la tenue mécanique de l'ensemble du mécanisme de coupe (6).

Pour de plus amples détails sur cet exemple d'organe de coupe (10, 10'), l'homme du métier peut se référer au document **FR 2 774 853**.

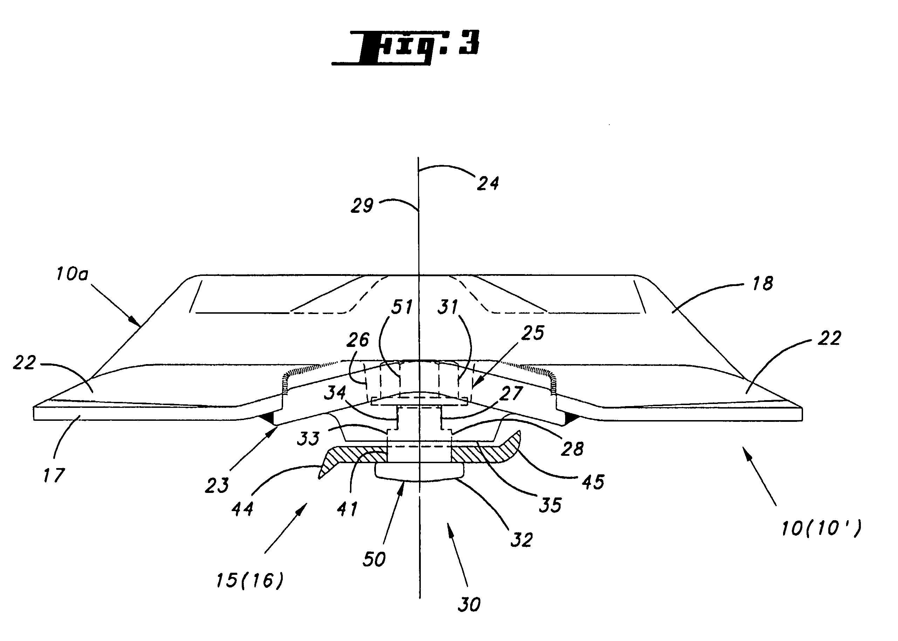

La figure 3 montre une vue de l'organe de coupe (10, 10') de la figure 2 suivant la flèche III (direction du grand diamètre (21)) définie sur la figure 2, l'élément de coupe (15, 16) étant vu en coupe.

Chaque cuvette (23) qui, dans cet exemple, est soudée au support (10a), comporte un trou (25). Ledit trou (25) se compose d'une section supérieure (26) sensiblement cylindrique ou légèrement tronconique, d'une section intermédiaire (27) oblongue et d'une section inférieure (28) cylindrique. Ces différentes sections (26 - 28) sont concentriques d'axe (29) sensiblement parallèle à l'axe de symétrie (24) de l'organe de coupe (10, 10').

Ledit élément de coupe (15, 16) est lié à la cuvette (23) respective au moyen d'un élément de liaison (30) qui, dans cet exemple, se compose d'une vis (50) et d'un écrou (31). Ledit élément de liaison (30) réalise, entre l'élément de coupe (15, 16) et le support (10a), une articulation d'axe (29) dirigé, durant le travail, vers le haut. Ce degré de liberté permet audit élément de coupe (15, 16) de s'étendre, sous l'effet de la force centrifuge due à la fréquence de rotation de l'organe de coupe (10, 10'), radialement suivant la direction du grand diamètre (21), et de s'esquiver en cas de choc avec un obstacle lors du travail. Ladite vis (50) comporte, de bas en haut (figure 3) une tête (32), une section cylindrique (33), une section oblongue (34) et enfin une partie filetée (51) sur laquelle est vissé l'écrou (31). Ladite section cylindrique (33) assure à la fois le guidage de l'élément de coupe (15, 16) et le centrage de ladite vis (50) dans la section inférieure (28) du trou (25). Les sections oblongues (27, 34), respectivement de la cuvette (23) et de la vis (50), empêchent une rotation de ladite vis (50) par rapport à ladite cuvette (23). Ainsi, les opérations de serrage et de desserrage de l'écrou (31) sur ladite vis (50) peuvent se faire avec un seul outil. On peut également remarquer que, dans l'exemple de réalisation de la figure 3, ledit écrou (31) est complètement noyé dans la section supérieure (26) du trou (25) de la cuvette (23) afin d'être protégé contre une usure rapide due notamment à un contact répété avec le produit coupé. L'arrêt en translation de l'élément de coupe (15, 16) suivant l'axe (29) se fait, vers le bas, par la tête (32) de la vis (50) et, vers le haut, par la face inférieure (35) de la cuvette (23). A noter que les dimensions des différentes sections de la vis (50) et du trou (25) font que la distance entre la tête (32) de la vis (50) et la face inférieure (35) de la cuvette (23) est, après serrage de l'écrou (31) sur la partie filetée (51) de la vis (50), au moins légèrement supérieure à l'épaisseur de l'élément de coupe (15, 16), ce qui garantie la possibilité d'un pivotement sans entrave de ce dernier autour de l'axe de la vis (50).

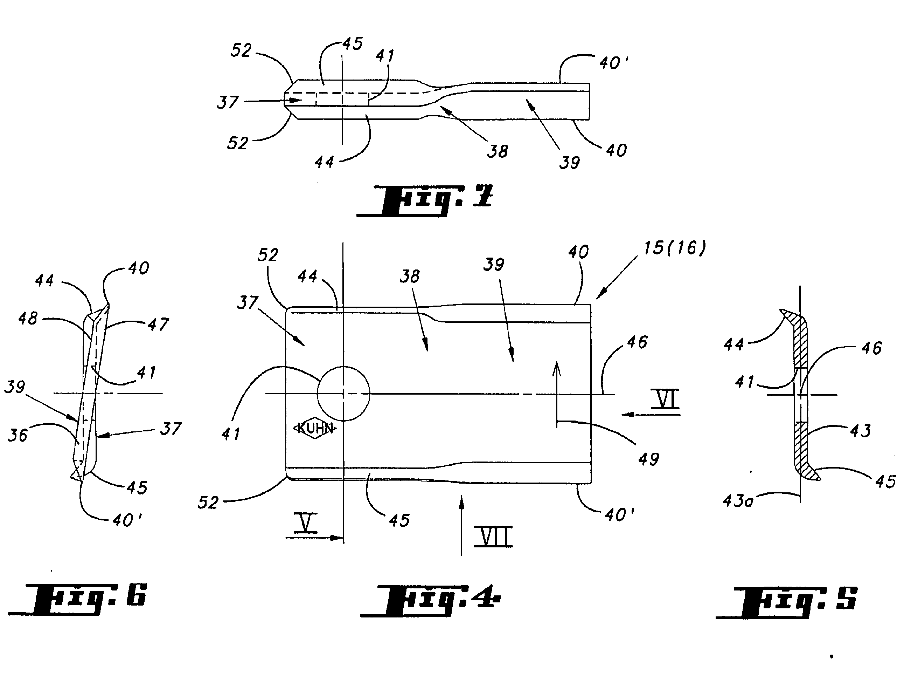

Les figures 4 à 7 montrent différentes vues d'un élément de coupe (15. 16) conforme à la présente invention. La figure 4 est une vue en plan. En se basant sur celle-ci, la figure 5 est une vue en coupe suivant la flèche V, la figure 6 est une vue suivant la flèche VI et la figure 7 est une vue suivant la flèche VII.

Dans cet exemple de réalisation, ledit élément de coupe (15, 16) est réalisé à partir d'un profilé plat à section trapézoïdale (36) comportant une grande base (47) et une petite base (48). Après façonnage, ledit élément de coupe (15, 16) comporte trois zones distinctes : une zone de liaison (37), une zone active (39) et une zone intermédiaire (38) assurant la jonction entre les deux zones (37, 39) précédemment citées.

La section trapézoïdale (36) permet à ladite zone active (39) de présenter deux arêtes de coupe (40, 40') effilées, sans avoir à recourir à des opérations de façonnage supplémentaires. La zone de liaison (37) comporte d'une part une partie centrale (43) sensiblement plane et munie d'un trou (41) permettant le passage de la vis (50), et d'autre part, dans cet exemple, deux bords (44, 45) inclinés par rapport à ladite partie centrale (43). En fait, ladite partie centrale (43) présente un plan d'extension (43a), et un bord (44) est incliné vers un côté de ce plan d'extension (43a), tandis que l'autre bord (45) est incliné vers l'autre côté dudit plan d'extension (43a). Chacun desdits bords (44, 45) est ainsi plié dans un sens différent de manière à ce que la zone de liaison (37) respecte sensiblement une symétrie axiale autour de l'axe longitudinal (46) de l'élément de coupe (15, 16). Le respect de ladite symétrie d'axe (46) permet de lier l'élément de coupe (15, 16) sur l'organe de coupe respectif (10, 10') avec la grande base (47) de la section trapézoïdale (36) dirigée soit vers le bas, soit vers le haut, ce qui offre à l'utilisateur la possibilité d'utiliser au mieux ledit élément de coupe (15, 16). La hauteur des bords inclinés (44, 45) de la zone de liaison (37) est avantageusement déterminée de façon à ce qu'au moins un desdits bords inclinés (44, 45) protège la tête (32) de la vis (50) respective contre d'éventuels chocs lors du travail.

Dans l'exemple de l'élément de coupe (15, 16) représenté sur les figures 4 à 7, la zone active (39) est inclinée par rapport à la zone de liaison (37) par une légère rotation de l'une par rapport à l'autre autour de l'axe de symétrie (46) de la zone de liaison (37). Cette inclinaison qui est telle que l'arête de coupe active (40) soit plus proche du sol sur lequel opère la faucheuse (1) que l'arête de coupe non active (40'), a pour but de créer, lors du travail, un phénomène de soulèvement du produit coupé afin que ce dernier soit emmené par les organes de coupe (10, 10') dans la direction opposée à la direction d'avance (2). L'existence de deux sens de rotation (12, 13) des organes de coupe (10, 10') nécessite l'existence d'éléments de coupe (15, 16) ayant des sens d'inclinaison de la zone active (39) par rapport à la zone de liaison (37) différents. D'où la différence entre les éléments de coupe (15) équipant les organes de coupe (10) tournant dans le sens horaire (12) et les éléments de coupe (16) équipant les organes de coupe (10') tournant dans le sens anti-horaire (13). Pour faciliter la distinction entre ces deux types d'éléments de coupe (15, 16) lors des opérations de montage, ceux-ci possèdent un marquage (49) spécifique. Dans l'exemple des figures 4 à 7, la distinction est simplifiée grâce à une flèche (49) marquée en creux lors du façonnage sur la grande base (47) et sur la petite base (48) de la zone active (39). Ladite flèche (49) indique quel sens de rotation (12, 13) doit avoir l'organe de coupe (10, 10') sur lequel est lié ledit élément de coupe (15, 16).

La zone intermédiaire (38) assure une transition progressive entre la zone de liaison (37) et la zone active (39). Chaque bord plié (44, 45) de la zone de liaison (37) se prolonge jusque dans la zone intermédiaire (38) pour aboutir sur une arête de coupe (40, 40') de la zone active (39). Lesdits bords inclinés (44, 45) sont orientés dans le même sens que le sens d'inclinaison de la zone active (39) par rapport à la zone de liaison (37), de manière à réduire la déformation de la zone intermédiaire (38) lors du façonnage de l'élément de coupe (15, 16). Une déformation trop importante de ladite zone intermédiaire (38) pourrait en effet provoquer des fissurations nuisibles à la tenue mécanique dudit élément de coupe (15, 16).

Lesdits bords pliés (44, 45) comportent avantageusement, à l'opposé de la zone intermédiaire (38), un angle arrondi (52) afin de limiter le risque d'accrochage de produit coupé qui serait préjudiciable à la qualité du travail de la faucheuse à disques (1).

L'élément de coupe (15, 16) et la faucheuse à disques (1) qui viennent d'être décrits, ne sont qu'un exemple de réalisation et d'utilisation qui ne saurait en aucun cas limiter le domaine de protection défini par les revendications suivantes.

## Revendications

1. Elément de coupe pour une machine de coupe rotative (1) comportant une pluralité d'organes de coupe (10, 10') adjacents dont chacun est destiné, durant la coupe, à tourner autour d'un axe (14) respectif dirigé vers le haut, ledit élément de coupe (15, 16) comportant une zone active (39) destinée à couper des végétaux et une zone de liaison (37) destinée à lier ledit élément de coupe (15, 16) à un support (10a) de l'un respectif desdits organes de coupe (10, 10'), ***caractérisé par le fait que*** ladite zone de liaison (37) présente, en section transversale :
- une partie centrale (43) relativement plane,
- un premier bord (44) plié vers un côté d'un plan d'extension (43a) de ladite partie centrale (43), et
- un deuxième bord (45) plié vers l'autre côté dudit plan d'extension (43a).

2. Elément de coupe selon la revendication 1, ***caractérisé par le fait que*** ladite zone active (39) est inclinée par rapport à ladite zone de liaison (37) autour d'un axe longitudinal (46) dudit élément de coupe (15, 16), une zone intermédiaire (38) assurant la jonction entre ladite zone active (39) et ladite zone de liaison (37).

3. Elément de coupe selon la revendication 2, ***caractérisé par le fait que*** lesdits bords pliés (44, 45) de la zone de liaison (37) se prolongent jusque dans ladite zone intermédiaire (38).

4. Elément de coupe selon la revendication 2 ou 3, ***caractérisé par le fait que*** l'orientation desdits bords pliés (44, 45) de la zone de liaison (37) suit le sens de l'inclinaison de ladite zone active (39) par rapport à ladite zone de liaison (37).

5. Elément de coupe selon l'une quelconque des revendications 2 à 4, ***caractérisé par le fait que*** ladite zone active (39) comporte deux arêtes de coupe (40, 40'), et que l'inclinaison de ladite zone active (39) par rapport à ladite zone de liaison (37) est telle qu'une arête de coupe active (40) dudit élément de coupe (15, 16) se trouve, durant la coupe, plus proche du sol sur lequel évolue la machine de coupe (1), qu'une arête de coupe non active (40') dudit élément de coupe (15, 16).

6. Elément de coupe selon l'une quelconque des revendications 2 à 5, ***caractérisé par le fait que*** lesdits bords pliés (44, 45) de la zone de liaison (37) présentent, à l'opposé de la zone intermédiaire (38), un angle arrondi (52).

7. Elément de coupe selon l'une quelconque des revendications 1 à 6, ***caractérisé par le fait que*** ladite zone de liaison (37) comporte, dans ladite partie centrale (43), un trou (41) permettant le passage d'un élément de liaison (30) destiné à lier ledit élément de coupe (15, 16) audit support (10a) de l'organe de coupe (10, 10') respectif.

8. Elément de coupe selon l'une quelconque des revendications 1 à 7, ***caractérisé par le fait que*** ledit élément de coupe (15, 16) est réalisé à partir d'un profilé plat de section trapézoïdale (36).

9. Machine de coupe rotative comportant une pluralité d'organes de coupe (10, 10') adjacents dont chacun est destiné, durant la coupe, à tourner autour d'un axe (14) respectif dirigé vers le haut et comporte un support (10a) et au moins un élément de coupe (15, 16), ***caractérisée par le fait que*** ledit élément de coupe (15,16) est un élément de coupe selon l'une quelconque des revendications 1 à 8.

10. Machine de coupe rotative selon la revendication 9, ***caractérisée par le fait qu***'il s'agit d'une faucheuse dont lesdits supports (10a) des organes de coupe (10, 10') sont constitués chacun d'un disque.

11. Machine de coupe rotative selon une des revendications 9 ou 10, ***caractérisé par le fait* que** l'élément de coupe (15, 16) est lié de manière articulée audit support (10a) de l'organe de coupe (10, 10') respectif au moyen de l'élément de liaison (30).

12. Machine de coupe rotative selon la revendication 11, ***caractérisé par le fait* qu'**au moins un desdits bords (44, 45) de l'élément de coupe est plié de manière à protéger ledit élément de liaison (30) lors du travail.

## Claims

1. Cutting element for a rotary cutting machine (1) comprising a multiplicity of adjacent cutting members (10, 10') each of which is intended, during the cutting work, to rotate about an upwardly directed respective axis (14), the said cutting element (15, 16) comprising an active zone (39) intended to cut plants and a connecting zone (37) intended to connect the said cutting element (15, 16) to a support (10a) of a respective one of the said cutting members (10, 10'), ***characterized in* that** the said connecting zone (37) has, in cross section:
- a relatively flat central part (43),
- a first edge (44) folded toward one side of a plane of extension (43a) of the said central part (43), and
- a second edge (45) folded toward another side of the said plane of extension (43a).

2. Cutting element according to claim 1, ***characterized in* that** the said active zone (39) is inclined with respect to the said connecting zone (37) about a longitudinal axis (46) of the said cutting element (15, 16), an intermediate zone (38) making the join between the said active zone (39) and the said connecting zone (37).

3. Cutting element according to claim 2, ***characterized in* that** the said folded edges (44, 45) of the connecting zone (37) continue as far as the said intermediate zone (38).

4. Cutting element according to claim 2 or 3, ***characterized in* that** the orientation of the said folded edges (44, 45) of the connecting zone (37) follows the direction of the inclination of the said active zone (39) with respect to the said connecting zone (37).

5. Cutting element according to any one of claims 2 to 4, ***characterized in* that** the said active zone (39) comprises two cutting edges (40, 40') and that the inclination of the said active zone (39) with respect to the said connecting zone (37) is such that an active cutting edge (40) of the said cutting element (15, 16) is, during the cutting work, closer to the ground over which the cutting machine (1) is travelling than an inactive cutting edge (40') of the said cutting element (15, 16).

6. Cutting element according to any one of claims 2 to 5, ***characterized in* that** the said inclined edges (44, 45) of the connecting zone (37) have a rounded angle (52) on the opposite side to the intermediate zone (38).

7. Cutting element according to any one of claims 1 to 6, ***characterized in* that** the said connecting zone (37) comprises, in the said central part (43), a hole (41) allowing the passage of a connecting element (30) intended to connect the said cutting element (15, 16) to the said support (10a) of the respective cutting member (10, 10').

8. Cutting element according to any one of claims 1 to 7, ***characterized in* that** the said cutting element (15, 16) is made from a flat section piece of trapezoidal cross section (36).

9. Rotary cutting machine comprising a multiplicity of adjacent cutting members (10, 10') each of which is intended, during the cutting work, to rotate about an upwardly directed respective axis (14) and comprises a support (10a) and at least one cutting element (15, 16), ***characterized in* that** the said cutting element (15, 16) is a cutting element according to any one of claims 1 to 8.

10. Rotary cutting machine according to claim 9, ***characterized in* that** it is a mower, in which the said supports (10a) for the cutting members (10, 10') each consist of a disk.

11. Rotary cutting machine according to one of claims 9 or 10, ***characterized in* that** the cutting element (15, 16) is connected in an articulated manner to the said support (10a) of the respective cutting member (10, 10') by means of a connecting element (30).

12. Rotary cutting machine according to claim 11, ***characterized in* that** at least one of the said edges (44, 45) of the cutting element is folded so as to protect the said connecting element (30) during work.

## Patentansprüche

1. Schneidelement für eine Rotationsschneidmaschine (1) mit einer Vielzahl von aneinander grenzenden Schneideinrichtungen (10, 10'), die jeweils dazu bestimmt sind, sich während der Mäharbeit um eine jeweilige nach oben gerichtete Achse (14) zu drehen, wobei das Schneidelement (15, 16) einen aktiven Bereich (39), der dazu bestimmt ist, Pflanzen zu mähen, und einen Verbindungsbereich (37) umfasst, der dazu bestimmt ist, das Schneidelement (15, 16) mit einem Träger (10a) einer der jeweiligen Schneideinrichtungen (10, 10') zu verbinden, ***dadurch gekennzeichnet,* dass** der Verbindungsbereich im Querschnitt:
- einen relativ flachen Mittelteil (43),
- einen ersten zu einer Seite einer Ausdehnungsebene (43a) des Mittelteils (43) umgelegten Rand (44), und
- einen zweiten zur anderen Seite der Ausdehnungsebene (43a) umgelegten Rand (45),
aufweist.

2. Schneidelement nach Anspruch 1, ***dadurch gekennzeichnet,* dass** der aktive Bereich (39) zum Verbindungsbereich (37) um eine Längsachse (46) des Schneidelements (15, 16) geneigt ist, wobei ein Zwischenbereich (38) die Verbindung zwischen dem aktiven Bereich (39) und dem Verbindungsbereich (37) gewährleistet.

3. Schneidelement nach Anspruch 2, ***dadurch gekennzeichnet,* dass** sich die umgelegten Ränder (44, 45) des Verbindungsbereichs (37) bis zum Zwischenbereich (38) verlängern.

4. Schneidelement nach Anspruch 2 oder 3, ***dadurch gekennzeichnet,* dass** die Ausrichtung der umgelegten Ränder (44, 45) des Verbindungsbereichs (37) der Neigungsrichtung des aktiven Bereichs (39) in Bezug auf den Verbindungsbereich (37) folgt.

5. Schneidelement nach irgend einem der Ansprüche 2 bis 4, ***dadurch gekennzeichnet,* dass** der aktive Bereich (39) zwei Schneidkanten (40, 40') umfasst, und dass die Neigung des aktiven Bereichs (39) in Bezug auf den Verbindungsbereich (37) derart ist, dass sich eine aktive Schneidkante (40) des Schneidelements (15, 16) während der Mäharbeit näher zum Boden, auf dem sich die Mähmaschine (1) bewegt, ist als eine nicht aktive Schneidkante (40') des Schneidelements (15, 16).

6. Schneidelement nach irgend einem der Ansprüche 2 bis 5, ***dadurch gekennzeichnet,* dass** die umgelegten Ränder (44, 45) des Verbindungsbereichs (37) gegenüber dem Zwischenbereich (38) eine abgerundete Ecke (52) aufweisen.

7. Schneidelement nach irgend einem der Ansprüche 1 bis 6, ***dadurch gekennzeichnet,* dass** der Verbindungsbereich (37) im Mittelteil (43) ein Loch (41) umfasst, das den Durchgang eines Verbindungselements (30) ermöglicht, das dazu bestimmt ist, das Schneidelement (15, 16) mit dem Träger (10a) der jeweiligen Schneideinrichtung (10, 10') zu verbinden.

8. Schneidelement nach irgend einem der Ansprüche 1 bis 7, ***dadurch gekennzeichnet,* dass** das Schneidelement (15, 16) aus einem Flachprofil mit trapezförmigem Querschnitt (36) hergestellt ist.

9. Rotationsschneidmaschine mit einer Vielzahl von aneinander grenzenden Schneideinrichtungen (10, 10'), die jeweils dazu bestimmt sind, sich während der Mäharbeit um eine jeweilige nach oben gerichtete Achse (14) zu drehen, und einen Träger (10a) und mindestens ein Schneidelement (15, 16) umfassen, ***dadurch gekennzeichnet,* dass** das Schneidelement (15, 16) ein Schneidelement nach irgend einem der Ansprüche 1 bis 8 ist.

10. Rotationsschneidmaschine nach Anspruch 9, ***dadurch gekennzeichnet,* dass** es sich um eine Mähmaschine handelt, deren Träger (10a) der Schneideinrichtungen (10, 10') jeweils von einer Scheibe gebildet sind.

11. Rotationsschneidmaschine nach irgend einem der Ansprüche 9 oder 10, ***dadurch gekennzeichnet,* dass** das Schneidelement (15, 16) gelenkig mit dem Träger (10a) der jeweiligen Schneideinrichtung (10, 10') mittels des Verbindungselements (30) verbunden ist.

12. Rotationsschneidmaschine nach Anspruch 11, ***dadurch gekennzeichnet,* dass** mindestens einer der Ränder (44, 45) des Schneidelements derart umgelegt ist, dass er das Verbindungselement (30) während der Arbeit schützt.
